# EUROPEAN PATENT APPLICATION

(11) **EP 2 239 652 A1**
(43) Date of publication of application: **13.10.2010**
(21) Application number: 09157561.3
(22) Date of filing: 07.04.2009
(51) Int. Cl.: G06F 3/048, G06F 3/01

(54) **Providing an interactive visual representation on a display**

(71) Applicant: Keywords.de GmbH, 80796 Munich (DE)
(72) Inventor: Dieckmann, Michael, 80796, Munich (DE)
(74) Representative: Dendorfer, Claus

(57) **Abstract**

The invention provides a method, apparatus and computer program product for providing an interactive visual representation (16) on a display (10). The invention comprises showing a two-dimensional visual representation (16) on the display (10), wherein the visual representation (16) comprises a plurality of continuously moving visual elements (18.x) that provide the appearance of a three-dimensional shape, using at least two images (24.x) of a sequence of images (24.x) taken by at least one electronic camera (12) to determine at least one movement value, wherein the movement value is indicative of a movement of a person as depicted by the at least one electronic camera (12), and influencing the visual representation (16) based on the at least one movement value. The invention provides an interactive visual representation (16) that works well even if a rather simple movement tracking technique is used

## Description

### FIELD OF THE INVENTION

The present invention generally relates to the field of providing an interactive visual representation on a display.

### BACKGROUND OF THE INVENTION

Interactive visual representations are an important feature of computers and other electronic devices. For example, interactive visual representations can be employed in sophisticated user interfaces. Interactive visual representations can also serve to make a device more interesting and/or more intuitive and/or more enjoyable to use. Furthermore, interactive visual representations may help to attract the attention of users of a device or other persons.

In order to provide the desired interactivity, it is necessary to obtain a feedback signal by measuring or determining some action of a person. The feedback signal then influences the visual representation. It is also well-known to employ a movement recognition technique such as an eye tracking method to determine a movement of a person - normally a user of the device -, and to influence the behavior of the device on the basis of this determined movement.

Various different movement recognition techniques are known. For example, WO 2006/009917 A1 discloses a gaming machine that incorporates an eye tracking function. This eye tracking function uses a digital camera and a dedicated light source that creates a small, bright reflection on the surface of the user's eye. However, requiring this dedicated light source makes it difficult to use the method with standard, off-the-shelf devices.

US 2003/0146901 A1 discloses an eye tracking method in which a 3D computer model of a head is used to obtain eye position data from image frames that are output by a single digital camera. The method strives to provide reliable and accurate eye tracking and therefore requires a considerable amount of computing power.

Generally, most efforts in the field of tracking the movement of a person - this includes tracking the movement of body parts of a person such as eye tracking - concentrate on providing reliable and accurate movement data. This is a complex task that typically requires special hardware and/or considerable computing power. It would be desirable to expand the field of application of movement tracking methods such that simpler - and consequently less accurate and less reliable - methods can also be used.

### OBJECTS AND SUMMARY OF THE INVENTION

It is therefore an object of the present invention to provide an interactive visual representation that works well even if a rather simple movement tracking technique is used.

The present invention is defined by the independent claims. The dependent claims concern optional features of some embodiments of the invention.

The present invention is based on the fundamental idea that certain kinds of interactive visual representations work well even if their interaction is not based on fully accurate movement tracking data. In particular, the present invention proposes to use a two-dimensional visual representation that comprises a plurality of continuously moving visual elements, the visual elements providing the appearance of a three-dimensional shape.

The inventor has found that the inventive combination of continuously moving visual elements and an apparently three-dimensional shape is surprisingly effective in masking any errors or inaccuracies in the movement tracking data. The inventor assumes that this effect is due to an inherent tendency of the human visual system to see three-dimensional shapes, combined with the ability of the human visual system to construct a convincing three-dimensional scene from comparatively little information. Consequently, the present invention proposes to use a rather simple movement tracking technique, in which at least one movement value is obtained from a sequence of images taken by at least one electronic camera.

Embodiments of the present invention may work with standard, off-the-shelf hardware, and may need comparatively little computing power and little memory. In particular, some embodiments of the invention use only a single electronic camera. Such embodiments work with many existing computer systems - e.g., systems that have a built-in Web camera - without any hardware modification.

In some embodiments of the invention, the visual representation is designed to attract the attention of a user or of other persons. Such embodiments may be used in electronic advertising billboards or electronic kiosks or on Web pages that are viewed using standard personal computers. In other embodiments, the visual representation is a navigation interface. For example, the navigation interface may be used to navigate within a complex Internet site or a social network application.

In some embodiments of the invention, the continuously moving visual elements comprise a plurality of tags. For example, each of these tags may be a textual tag (showing one or more words) or a static graphical tag (showing a picture) or a dynamic graphical tag (showing a video). Embodiments in which tags are used as the moving visual elements are particularly suitable for implementing a navigation interface wherein each tag corresponds to one navigation link, and wherein the tag shows a text or picture or video denoting the target of the link.

Some embodiments in which the visual representation is a navigation interface further provide a user-controllable cursor. Input elements that are known as such
- for example, a mouse or a trackball - may be employed for moving the cursor within the navigation interface. The user-controllable cursor may be used to select one of the plurality of visual elements, thus signifying that the user wishes to proceed along this navigation link. In some embodiments, the user-controllable cursor has a variable size that reflects the perceived distance of the cursor from the user within the apparently three-dimensional shape.

In some embodiments, the moving visual elements may give the impression of a three-dimensional ellipsoid or, in particular, as sphere. This perceived sphere or ellipsoid may be rotating and/or pulsating due to the movement of the individual visual elements. The movement paths of the visual elements may be virtual circles or virtual ellipses. However, in many embodiments these movement paths are not shown on the display in order to improve the virtual three-dimensional perception.

In some embodiments, the three-dimensional shape is shown at a position and orientation that is the sum of a home position, a home orientation and an angular deflection. It may be provided in some embodiments that the at least one movement value influences the deflection. When no current movement is detected, the deflection gradually returns to zero in some embodiments. The home position and/or the home orientation may be fixed or user-selectable. For example, the home position and/or the home orientation may be set to the currently shown position and/or orientation of the three-dimensional shape if the user presses a certain key or selects a certain active field on the display or gives an audio command (such as a spoken voice command or a clapping).

In some embodiments, only a single electronic camera is used to capture the sequence of images that are the basis for the motion detection. Such embodiments are particularly simple and work with a wide variety of off-the-shelf hardware. It is a particular advantage of the present invention that only a comparatively low level of accuracy of the motion detection is required, such that even roughly estimated movement values taken from low-quality images of a single camera may be acceptable.

Some embodiments use a rather simple technique for determining the at least one movement value in which at least one contour or color area in at least two images is determined, and a change of the contour or color area between the two images is used as a basis for calculating the at least one movement value. Again, a rough estimate of the current movement may be perfectly sufficient in some embodiments of the invention.

In some embodiments, the at least one movement value is indicative of a movement of a plurality of persons. Such embodiments are particularly advantageous if the invention is used in connection with social networking applications or advertising billboards or kiosks. For example, the movement of at least two of the plurality of persons may be tracked individually, such that at least two movement values are determined, wherein each of these movement values is indicative of a movement of one of the plurality of persons. As another example, the at least one movement value may also represent an average or typical movement of the plurality of persons. This may comprise an operation of determining the barycenter of certain portions (e.g., all skin-colored portions) of each image that is taken by the electronic camera. There may also be some majority operation that tries to determine the movement of the majority of the persons shown in the images and disregards the movement of the other persons. For example, in an advertising billboard, the apparently three-dimensional shape may follow the movement of the majority of people passing the billboard.

The computer program product of the present invention can be embodied on a physical medium such as, for example, a CD-ROM or a hard disk or a semiconductor memory. In some embodiments, the computer program product may also be embodied as program instructions carried by an electrical or optical or electromagnetic signal such as a data stream transmitted over a computer network.

The apparatus and the computer program product of the present invention may be further developed, in some embodiments, by the features described herein and in the dependent method claims.

### BRIEF DESCRIPTION OF THE DRAWINGS

Further features, objects and advantages of the invention will become apparent when studying the following detailed description, in connection with the annexed drawings, in which:
Fig. 1 is a schematic diagram of a device according to an embodiment of the present invention, and
Fig. 2 is a flow diagram of a method according to an embodiment of the present invention.

### DETAILED DESCRIPTION OF EMBODIMENTS OF THE INVENTION

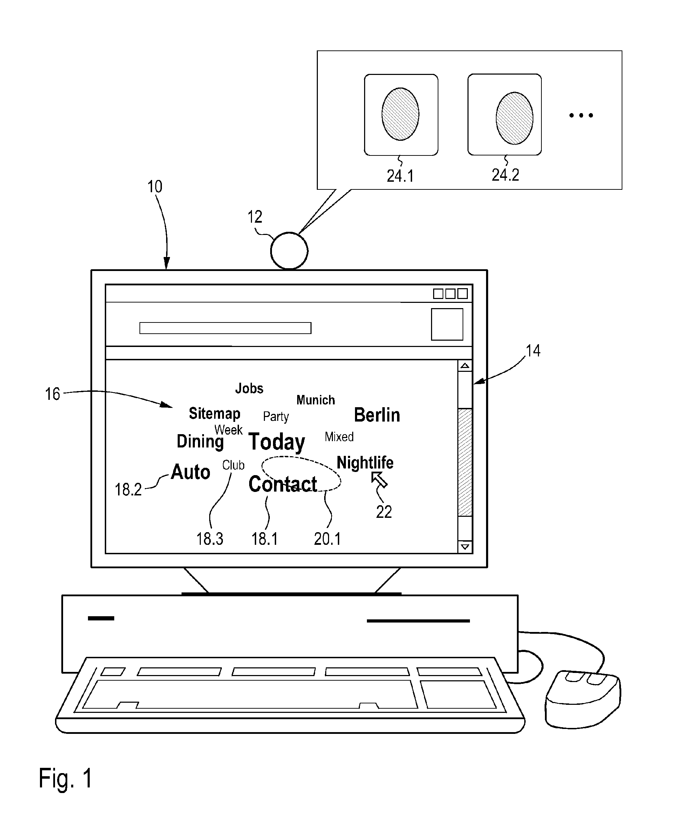

Fig. 1 shows a computer comprising a display 10 with an attached digital camera 12. The display 10 and the digital camera 12 may be part of a standard personal computer (e.g., a desktop computer as depicted in Fig. 1 or a notebook), or they may be contained in a compact handheld device (e.g., a gaming device or a mobile telephone or a personal digital assistant), or they may be part of a dedicated device (e.g., an advertising billboard). In the presently described embodiment, the display 10 shows a window 14, which may be a window of a standard Internet browser such as one of the browsers known under the trademarks Internet Explorer or Firefox. The window 14 depicts a visual representation 16, which consists of a plurality of visual elements 18.1, 18.2, 18.3, .... The visual elements 18.1, 18.2, 18.3, ... will be designated by the reference numeral 18.x in the following. In the embodiment shown in Fig. 1, the visual elements 18.x are textual tags, but they could also be pictures or small videos.

Each of the visual elements 18.x is in continuous movement. Fig. 1 shows a sample path 20.1 along which the visual element 18.1 moves. The path 20.1 is depicted in Fig. 1 for purposes of illustration only. The path 20.1 is invisible on the actual display 10. Likewise, the other visual elements 18.x move along similar invisible paths, which will be designated as paths 20.x in the following.

All visual elements 18.x together provide the visual representation 16 with the appearance of a three-dimensional shape. In the embodiment shown in Fig. 1, the apparent three-dimensional shape is a slightly flattened ellipsoid. The impression of three-dimensionality is much more marked in the actual moving representation on the display 10, probably due to the fact that the continuous movement of the visual elements 18.x supports the perception of the three-dimensional shape by the human visual system.

The size of the moving elements 18.x varies in line with the perceived depth level of the visual elements 18.x in the three-dimensional shape. For example, the visual element 18.1 is perceived to be closer to the user (i.e., on the "front side" of the apparent ellipsoid) than the visual element 18.3, which is perceived further away from the user (i.e., at the "back side" of the ellipsoid). Consequently, the visual element 18.1 is shown larger than the visual element 18.3. During the course of the visual element 18.1 along the path 20.1, the size of the visual element 18.1 will gradually increase and decrease, in line with the perceived distance of the visual element 18.1 from the user. This feature further enhances the perception of three-dimensionality.

All in all, the visual representation 16 of the embodiment shown in Fig. 1 provides the appearance of a continuously pulsating ellipsoid. This is because the paths 20.x are comparatively small, such that each visual element 18.x performs only a small, "wobbling" movement. In other embodiments of the present invention, a continuous rotational movement of the three-dimensional shape is provided instead of, or in addition to, the pulsating movement. For example, the size of the paths 20.x may be increased such that each visual element 18.x gradually moves along the whole extension of the apparent three-dimensional shape.

The cursor 22 is shown on the displayed scene in association with the visual representation 16. The user controls the curser 22 by means of a well-known user interface device such as, for example, the mouse shown in Fig. 1. When the user moves the cursor 22 over one of the visual elements 18.x, the visual element 18.x is highlighted. Furthermore, the size of the cursor 22 also changes to correspond to the perceived perspective depth - and thus the size - of the selected visual element 18.x. For example, when the user selects the visual element 18.1, the cursor 22 will be shown larger than when the user selects the visual element 18.3. This effect emphasizes the depth perception and improves the three-dimensional appearance of the visual representation 16.

The embodiment shown in Fig. 1 serves as a three-dimensional navigation interface, wherein each visual element 18.x represents a possible navigation link. The user follows one of these navigation links by selecting the corresponding visual element 18.x with the cursor 22 and giving an appropriate user command, such as clicking a mouse key.

The digital camera 12 takes a continuous series of images 24.1, 24.2, ..., which will be referred to as images 24.x in the following. The images show the user or some body part of the user such as, for example, the user's head.

The images 24.x are processed by the device of the present embodiment to determine at least one movement value. In the embodiment shown in Fig. 1, the movement value is indicative of a movement of the user as depicted by the digital camera 12. In the terminology used herein, the wording of a "movement of the user" is understood to comprise a movement of a body part of the user such as, for example, the user's head.

Many embodiments of the present invention use a comparatively simple method for determining the movement value. For example, in some embodiments a color area that that is deemed to correspond to the user's head is determined in each of the images 24.x. Other or additional distinctive color areas (e.g., corresponding to a brightly colored hat of a user) may be determined in some embodiments. Then the mid point or barycenter of the determined color area is calculated for each of the images 24.x. The movement value can then be determined as a movement vector that indicates the change of the barycenter of the color area between the individual images 24.x.

In other embodiments, a determination of the likely contour of the user's face is made, and the movement value is a movement vector designating the approximate movement of this contour between the images 24.x. Generally, no exact movement tracking is necessary since the continuous movement of the individual visual elements 18.x masks any errors or inaccuracies in the determined movement values.

The method of determining the barycenter of all skin-colored parts of the images 24.x is also suitable for determining an average of the movement of more than one person. Of course, other methods - e.g., methods the determine contours or other color areas - may also be used for calculating appropriate movement values if more than one person is shown in the images 24.x.

In addition to, or instead of, determining a movement vector that is essentially perpendicular to the direction of view of the camera 12, it is also possible to determine a movement value that corresponds to a movement of the user in the direction of view of the camera 12. For example, if a color area or contour that corresponds to the head of the user serves as the basis of the movement detection method, then an increase in size of the color area or contour represents a movement towards the camera 12, and a decrease in size represents a movement away from the camera 12. In particularly simple embodiments, it is possible to just count the number of skin-colored pixels in each image 24.x, and to determine a movement value in the direction of view of the camera 12 according to the counted number.

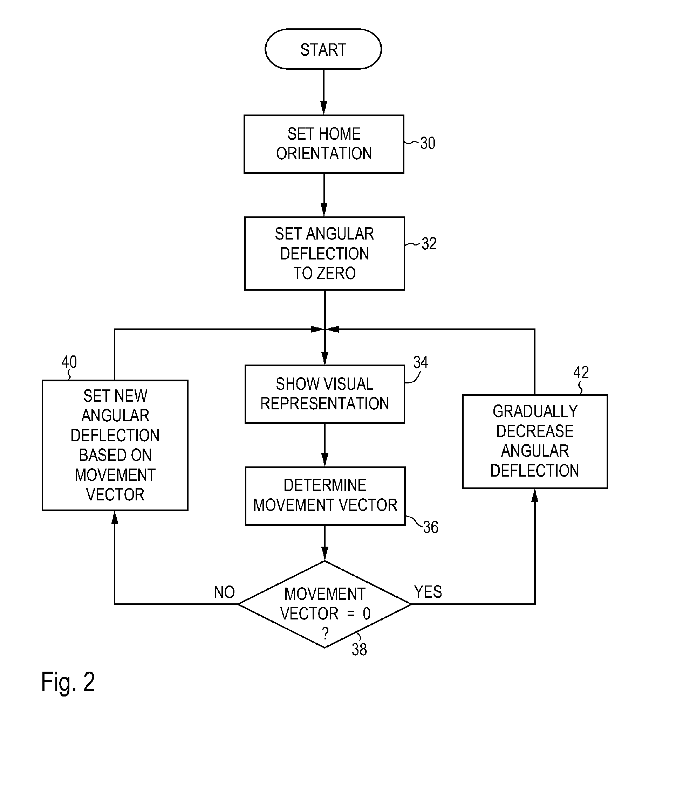

In the present embodiment, the determined movement values are then used to influence the visual representation 16 according to a method that is shown in Fig. 2.

Generally, the visual representation 16 has a home position and a home orientation, as well as a current angular deflection. The home position and orientation determine the center point and angular position of the perceived ellipsoid. The home position may be fixed, or it may be user-settable. The home orientation is set in step 30 of Fig. 2. For example, a user command such as a spoken command word may be used to set the current orientation of the visual representation 16 as the new home orientation. The current angular deflection is then set to zero in step 32.

Processing step 34 shows the current visual representation in the display 10, based on the home position, the home orientation and the current angular deflection. In step 36, a current movement vector is calculated from the current images 24.x. If the movement vector indicates an actual movement (branch "no") of test 38, then execution proceeds to step 40, in which new angular deflection values are set based on the determined movement vector. On the other hand, if no movement is detected (branch "yes" of test 38), then the current angular deflection values are gradually decreased in step 42. In both cases, program execution continues at step 34.

It is apparent that the method of Fig. 2 concerns the overall depiction of the visual representation 16 and is therefore independent of the continuous movement of the visual elements 18.x along the respective paths 20.x. This continuous movement is implemented in step 34 by a successive advancing of each visual element 18.x along its associated path 20.x. In other embodiments, the continuous movement of the visual elements 18.x is directly influenced by the determined movement values. This direct influence may be in addition to, or instead of, the global movement of the visual representation 16 as defined by the flow diagram of Fig. 2.

Furthermore, the inventor also envisages embodiments in which the continuous movement of the visual elements 18.x is the result of the global movement mechanism as shown in Fig. 2. In these embodiments, there is a continuous change of the angular deflection, in addition to any change that is caused if a movement of the user is determined. In such embodiments, no additional movement paths 20.x are necessary, although they can be provided for producing more intricate movement patterns. The inventor has found that using a suitable movement pattern of the visual elements 18.x can greatly enhance impression of a three-dimensional shape and therefore increase the attractiveness of the present invention.

The particulars contained in the above description of sample embodiments should not be construed as limitations of the scope of the invention, but rather as exemplifications of some embodiments thereof. Accordingly, the scope of the invention should be determined not by the embodiments illustrated, but by the appended claims and their legal equivalents.

## Claims

1. A method for providing an interactive visual representation (16) on a display (10), the method comprising:
- showing a two-dimensional visual representation (16) on the display (10), the visual representation (16) comprising a plurality of continuously moving visual elements (18.x) that provide the appearance of a three-dimensional shape,
- using at least two images (24.x) of a sequence of images (24.x) taken by at least one electronic camera (12) to determine at least one movement value, the movement value being indicative of a movement of a person as depicted by the at least one electronic camera (12),
- influencing the visual representation (16) based on the at least one movement value.

2. The method of claim 1, wherein the continuously moving visual elements (18.x) comprise a plurality of tags, wherein each tag is a textual tag or a static graphical tag or a dynamic graphical tag.

3. The method of claim 1 or claim 2, wherein the visual representation (16) is a navigation interface.

4. The method of claim 2, wherein the visual representation (16) is a navigation interface, and wherein the method comprises showing a user-controllable cursor (22) within the navigation interface to enable a user to select one of the tags.

5. The method of claim 4, wherein the user-controllable cursor (22) has a variable size that is influenced by an apparent depth of a currently selected tag within the navigation interface.

6. The method of any one of claims 1 to 5, wherein the three-dimensional shape is a sphere or an ellipsoid.

7. The method of any one of claims 1 to 6, wherein the continuously moving visual elements (18.x) move along circular or elliptical paths (20.x), thus providing the appearance of a continuously rotating and/or pulsating sphere or ellipsoid.

8. The method of claim 7, wherein the paths (20.x) are invisible on the display (10).

9. The method of any one of claims 1 to 8, wherein the three-dimensional shape is shown at a deflection from a home orientation, and wherein the at least one movement value influences the deflection, and wherein the deflection gradually returns to zero if the at least one movement value indicates that there is no current movement.

10. The method of claim 9, wherein the home orientation is set by a user command.

11. The method of any one of claims 1 to 10, wherein the sequence of images is taken by a single electronic camera (12).

12. The method of any one of claims 1 to 11, wherein determining the at least one movement value comprises:
- determining at least one contour or color area in a first image of the sequence of images (24.x),
- determining a change of the contour or color area in a second image of the sequence of images (24.x) with respect to the first image, and
- determining the at least one movement value depending on the determined change.

13. The method of any one of claims 1 to 12, wherein the at least one movement value is indicative of a movement of a plurality of persons.

14. An apparatus having a display (10), at least one electronic camera (12), and a processing unit, the apparatus being adapted for performing the method of any one of claims 1-13.

15. A computer program product comprising a plurality of program instructions, the program instructions being adapted for causing at least one processor to execute the method of any one of claims 1-13.
